# EUROPÄISCHE PATENTANMELDUNG

(11) **EP 3 477 892 A1**
(43) Veröffentlichungstag der Anmeldung: **01.05.2019**
(21) Anmeldenummer: 17198776.1
(22) Anmeldetag: 27.10.2017
(51) Int. Cl.: H04L 12/24, H04L 12/26, H04J 14/02

(54) **VERFAHREN UND ANORDNUNG ZUR AUTOMATISCHEN ÜBERWACHUNG VON BETRIEBSPARAMETERN IN MULTIBETREIBER-TELEKOMMUNIKATIONSNETZEN MIT GEMEINSAM GENUTZTER INFRASTRUKTUR**

(71) Anmelder: Deutsche Telekom AG, 53113 Bonn (DE)
(72) Erfinder: Breuer, Dirk, 16727 Oberkrämer OT Bötzow (DE); Weis, Erik, 14612 Falkensee (DE); Lange, Christoph, 10318 Berlin (DE)
(74) Vertreter: Raible Deissler Lehmann Patentanwälte PartG mbB

(57) **Zusammenfassung**

Die vorliegende Erfindung betrifft ein Verfahren zur automatischen Überwachung von Betriebsparametern in mehreren eine gemeinsame Netzinfrastruktur nutzenden Telekommunikationsnetzen von entsprechend mehreren Dienstanbietern (213_1, 231_2, ..., 213_N), wobei die mehreren Telekommunikationsnetze ein gemeinsames optisches Zugangsnetz (200) nutzen, über welches ein jeweiliger Dienstanbieter (213_1, 231_2, ..., 213_N) mit einem jeweiligen einen Dienst von dem jeweiligen Dienstanbieter nutzenden Endnutzer (211_1, 211_2, ..., 211_n) verbunden wird, wobei die mehreren Dienstanbieter über jeweilige den jeweiligen Dienstanbietern zuordenbare Zuleitungen (1, ..., N) zu einem gemeinsamen ersten Koppelpunkt (210) an das optische Zugangsnetz (200) angekoppelt werden und über von einem gemeinsamen zweiten Koppelpunkt (212) abzweigende jeweilige den jeweiligen Dienstanbietern zuordenbare Anschlussleitungen ein jeweiliger Dienstanbieter (213_1, 231_2, ..., 213_N) jeweils mit einem jeweiligen einen Dienst von dem jeweiligen Dienstanbieter nutzenden Endnutzer (211_1, 211_2, ..., 211_n) verbunden wird, wobei der erste Koppelpunkt (210) und der zweite Koppelpunkt (212) über eine Hauptleitung (205) miteinander verbunden sind, wobei in einer jeweiligen Zuleitung eines jeweiligen Dienstanbieters zu dem optischen Zugangsnetz (200) eine jeweilige dem jeweiligen Dienstanbieter zuordenbare dienstanbieterseitige Überwachungseinheit (219, 219*) vorgesehen wird und in dem Hauptstrang zwischen erstem Koppelpunkt (210) und zweitem Koppelpunkt (212) eine netzseitige Überwachungseinheit (218) vorgesehen wird, wobei die netzseitige Überwachungseinheit (218) und die jeweiligen dienstanbieterseitigen Überwachungseinheiten (219, 219*) jeweilig mit einer zentralen Kontroll- und Steuereinheit (220) verbunden werden, wobei die zentrale Kontroll- und Steuereinheit (220) von den Überwachungseinheiten (218, 219, 219*) erfasste Daten aufnimmt, speichert und zentral auswertet.

## Beschreibung

Die vorliegende Erfindung bezieht sich auf das allgemeine Gebiet der Telekommunikation und im Speziellen auf ein Verfahren zur automatischen Überwachung von Betriebsparametern in mehreren eine gemeinsame Fasernetzinfrastruktur nutzenden Telekommunikationsnetzen von entsprechend mehreren Dienstanbietern. Ferner betrifft die vorliegende Erfindung ein entsprechendes System.

In heutigen Telekommunikationsnetzen wird die Nutzung einer physikalischen Fasernetzinfrastruktur auf Ebene einzelner Fasern bzw. Wellenlängen üblicherweise nicht unter verschiedenen Dienstanbietern bzw. Service Providern geteilt. Ein Zugangsnetz (Access-Netz) umfasst Anschlüsse von Teilnehmern der Telekommunikation und bietet diesen Zugang zu höheren Netzebenen bzw. zu dem Kernnetz (Core-Netz). Bei dem Zugangsnetz handelt es sich um ein hybrides Netzwerk, bestehend aus einem optischen Zugangsnetz, das die Anbindung an das Kernnetz realisiert, und mindestens einer Anbindung an einen jeweiligen Teilnehmer, die in der Regel durch eine Kupfer-Doppelader erfolgt. Schnittstellen des optischen Zugangsnetzes sind kernnetzseitig ein Interface-Knoten und teilnehmerseitig eine Teilnehmer-Netz-Schnittstelle. Das Zugangsnetz besteht aus dem optischen Verteilnetz (ODN), das in Richtung Kernnetz, d. h. in Upstream-Richtung, vom optischen Leitungsabschluss (OLT) und in Richtung Teilnehmer, d. h. in Downstream-Richtung, von einer optischen Netzwerkeinheit (ONU) begrenzt wird. Der optische Leitungsabschluss und die optische Netzwerkeinheit sind über eine Glasfaser miteinander verbunden. Die optische Netzwerkeinheit ist in der Regel eine Multiplexer-Komponente.

Ein Zugangsnetz umfasst Zugangsknoten (Access Nodes), die als verstärkende und steuernde Netzelemente zwischen Teilnehmeranschluss und Vermittlungsstellen ("Service Node") eingefügt sind, um letztlich jeden Teilnehmeranschluss mit einer Vermittlungsstelle des Telekommunikationsnetzes verbinden zu können und damit eine Kommunikationsverbindung zu realisieren. Im Zugangsbereich (Access Bereich) werden, ggf. neben einer vorhandenen Telefonkabel-Infrastruktur, oft passive optische Netze (PON) genutzt. Üblicherweise wird heute Ethernet verwendet. Über ein derartiges optisches Zugangsnetz kann ein einzelner Service Provider mehrere Kunden bzw. Telefonanschlüsse über eine Infrastruktur anbinden und verschiedene Dienste anbieten. Ein passives optisches Zugangsnetz besteht bspw. aus einem netzseitigen Leitungsabschluss (Optical Line Termination (OLT)) bzw. einer Vermittlungsstelle mit einer Schnittstelle zum Weitverkehrsnetz, in der Regel mehreren, bspw. 16 bis 128 kundenseitigen bzw. anschlussseitigen Netzabschlussgeräten, (Optical Network Termination (ONT)) und dem voranstehend erwähnten optischen Verteilnetz (ODN) auf der Basis von Lichtwellenleitern (Glasfasern) und passiven optischen Verzweigungselementen bzw. Netzwerkeinheiten, wie bspw. passiven optischen Leistungskopplern oder anstelle dessen einem WDM (Wavelength Division Mulitplex) De-/Multiplexer. Das gesamte optische Zugangsnetz inklusive der davon umfassten Faserinfrastruktur befindet sich bislang in der Regel in der Hoheit eines jeweiligen Service Providers, so dass dieser direkt die angeschlossenen potentiellen Kunden bzw. Teilnehmer mit Diensten bzw. Inhalten versorgen kann. Dabei überwacht der jeweilige Service Provider sein eigenes Netz bzw. insbesondere sein eigenes optisches Zugangsnetz. Das heißt, dass bei einem Zugangsnetz, bspw. einem passiven optischen Zugangsnetz, ein Service Provider die physikalische Infrastruktur des Netzes exklusiv für seine potentiellen Kunden nutzt. Dabei werden die kundenseitigen Netzabschlussgeräte (ONT) über einen bspw. passiven optischen Leistungskoppler oder einen WDM De-/Multiplexer an ein netzseitiges Leitungsabschlussgerät (OLT) angebunden und über dessen Schnittstelle zum Weitverkehrsnetz, d. h. zu einem Service Node, geleitet bzw. angebunden. Der Koppler kann sich bspw. in einem Kabelverzweiger befinden und ist über Glasfasern eines Hauptkabels mit dem OLT in der Vermittlungsstelle verbunden, wobei die einzelnen Anschlüsse (ONT) über jeweilige Verzweigungskabel zu dem jeweiligen Koppler geleitet sind.

Würde man einem zweiten Service Provider auf Faserebene Zugang zu den angeschlossenen Kunden, d. h. zu den kundenseitigen Netzwerkeinheiten (ONT), geben, so müsste bspw. ein weiterer Koppelpunkt, wie bspw. ein Wellenlängenmultiplexer, z. B. ein AWG (Arrayed Waveguide Grating), eingeführt und entsprechende Filter zur lokalen Isolation eingesetzt werden. Es ergibt sich dann zusätzlich zu den Zugang zur Netzinfrastruktur suchenden Service Providern die Rolle eines sogenannten Netzinfrastruktur Providers (NIP), der eine derartige Dienstleistung den Zugang suchenden Service Providern zur Verfügung stellt. Wie bereits voranstehend erwähnt, überwacht jeder Service Provider bislang sein eigenes Netz, was bei einer gemeinsamen Nutzung des Fasernetzes nicht funktionieren würde. Das heißt, jeder einzelne Service Provider müsste sich hier auf die notwendigen getroffenen Absprachen, bspw. bezüglich Leistung und Wellenlänge, mit den jeweils anderen Service Providern verlassen, ohne eine direkte Möglichkeit einer Überprüfung zu haben. In einem Fehlerfall käme es zu Störungen auf den betroffenen Leitungen für alle angeschlossenen Service Provider. Auch die Einhaltung der Laserklasse 1M ist ohne weitere Maßnahmen im heutigen Betrieb mit mehreren Service Providern auf einer Glasfaser nicht sichergestellt. Bei Störungen oder im Fehlerfall werden somit umfangreiche, zeitaufwändige Abstimmungen und Koordinationen zwischen Service Providern und NIP notwendig, um Arbeiten an der Faserinfrastruktur zu ermöglichen. Eine Überprüfung der verabredeten technischen Parameter der eingespeisten Signale wäre nur manuell und punktuell möglich und sehr aufwändig. Eine Zusammenarbeit auf einer reinen Vertrauensebene ist aus Sicherheitsgründen nicht zu empfehlen, da die Einhaltung der Laserklasse 1M so nicht zu garantieren ist.

Ein voranstehend genanntes Arrayed Waveguide Grating (AWG) dient in der optischen Nachrichtentechnik dazu, Licht in verschiedenen Farben, d. h. Wellenlängen, aufzuzeichnen und respektive einzelner farbiger Lichtsignale wieder zu einem Lichtsignal zu vereinen. Eine Aufteilung in verschiedene Frequenzen nutzt man, um die so gewonnenen Signale auf unterschiedliche Lichtwellenleiter bzw. Glasfasern aufzusplitten. Den umgekehrten Weg nutzt man, um einzelne Lichtleiterstränge wieder in einem Hauptstrang bzw. Hauptkabel zu vereinen. Diese beiden Prozesse bezeichnet man abhängig von ihrer Richtung als Demultiplexen oder Multiplexen. In der modernen Telekommunikation ist ein Frequenzband von 50 GHz zwischen verschiedenen Lichtfrequenzen üblich. AWGs werden aus planaren Substraten, wie bspw. Siliziumwafern, hergestellt, auf denen eine Schicht aufgebracht ist, bspw. Glas, Silizium oder ein Polymer, in der man Wellenleiter realisieren kann.

Ein Glasfasernetz ist im Grunde ähnlich wie ein herkömmliches Telefonnetz mit Kupferkabeln aufgebaut. Der entscheidende Unterschied ist, dass sich bei den im Telefonnetz verwendeten Kupferkabeln mit zunehmender Länge ein induktiver Widerstand bildet und ohne entsprechende technische Vorkehrungen die Signalstärke bereits nach wenigen Kilometern deutlich abnimmt. Anders als bei anderen Leitungen können bei Glasfasernetzen theoretisch Datenraten von über 1000 MBit/s im Up- und Download bzw. im Up- und Downstream erreicht werden.

Die Einhaltung der Laserklasse 1M ist insofern sehr wichtig, als diese Laserklasse unter vernünftig vorhersehbaren Bedingungen augensicher ist und somit keine Gefährdung für das Augenlicht darstellt.

Die voranstehend erwähnte bisherige Nutzung des Zugangsnetzes durch einen Service Provider oder mittels eines NIP durch mehrere Service Provider bringt eine Reihe von Nachteilen mit sich. Insbesondere bei der gemeinsamen Nutzung eines Zugangsnetzes von mehreren Service Providern unter Einbindung eines NIP gibt es letztlich keine Leistungsüberwachung bei Zusammenschalten mehrerer Service Provider auf Laserklasse 1M. Auch wenn jeder einzelne Service Provider, d. h. seine kundenseitigen Anschlüsse, in Summe die Laserschutzklasse 1M erfüllt, kann es durch einen gemeinsamen Betrieb auf einer Glasfaser zu einer Überschreitung der zulässigen optischen Leistung auf der Zuleitung zu dem optischen Netz kommen. Dies führt zu Einschränkungen für den NIP, der ggf. im Fehlerfall das Gesamtsystem und damit den Dienst für alle Kunden aller Service Provider abschalten muss, anstatt den Störer zu identifizieren und gezielt abzuschalten. Der jeweilige Service Provider kennt nur seine eigenen Leistungen, aber nicht die der anderen Service Provider und auch nicht eine Belegung am Koppelpunkt für jeden einzelnen Anschlusspunkt, d. h. kundenseitigen Anschluss (ONT). Zudem können Arbeiten am Fasernetz nicht unabhängig von den Service Providern stattfinden, da die Einhaltung der Laserklasse 1M ggf. nicht mehr gewährleistet ist.

Darüber hinaus findet keine Überwachung einer Einhaltung zugewiesener bzw. vereinbarter technischer Parameter, wie bspw. Wellenlänge, Wellenlängenbereiche oder Leistung pro Kanal/Kanalbündel bzw. Frequenz/Frequenzband, statt. Eine Abweichung von vorgegebenen Wellenlängen kann dazu führen, dass sich die Signale der einzelnen Service Provider untereinander stören oder aber nicht und nur instabil bzw. teilweise übertragen werden. Wird dies nicht zentral überwacht, ist eine Störungserkennung und -lokalisierung und eine Zuordnung zu einem einzelnen Service Provider schwierig und ggf. nur mit großem Aufwand möglich.

Ferner ist es nur sehr schwer möglich, fehlerhafte Netzkonfigurationen bzw. Zusammenschaltungen oder auch fehlerhaft arbeitende Netzelemente, wie den voranstehend erwähnten Koppler, oder einzelne Filter zu ermitteln, da keiner der beteiligten Service Provider ein vollständiges Abbild der zugrundeliegenden Netzstruktur hat. Dies erfordert wiederum eine Koordination und Abstimmungen zwischen den einzelnen Service Providern. Eine Fehlersuche kann sich somit als sehr aufwändig erweisen und bezieht ggf. Service Provider mit ein, die weder von dem Fehler betroffen noch den Fehler verursacht haben.

Vor diesem Hintergrund war es nun eine Aufgabe der vorliegenden Erfindung, ein Verfahren und ein System bereitzustellen, eine gemeinsame Nutzung eines Zugangsnetzes durch voneinander unabhängige Service Provider zu ermöglichen und gleichzeitig eine zentrale Überwachung und ggf. Steuerung der von den Service Providern gemeinsam genutzten Netzinfrastruktur bzw. des von den Service Providern gemeinsam genutzten Zugangsnetzes zu gewährleisten.

Diese Aufgabe wird gelöst von einem Verfahren und einem System mit den Merkmalen der entsprechend jeweils unabhängigen Patentansprüche. Vorteilhafte Ausführungsformen sind den abhängigen Patentansprüchen und der nachfolgenden Beschreibung zu entnehmen.

Es wird ein Verfahren zur automatischen Überwachung von Betriebsparametern in mehreren, eine gemeinsame physikalische Netzinfrastruktur nutzenden Telekommunikationsnetzen von entsprechend mehreren Dienstanbietern bereitgestellt. Dabei werden insbesondere die Betriebsparameter in der gemeinsamen physikalischen Netzinfrastruktur bzw. die die gemeinsame physikalische Netzinfrastruktur betreffenden bzw. beeinflussenden Betriebsparameter überwacht. Dabei nutzen die mehreren Telekommunikationsnetze ein gemeinsames optisches Zugangsnetz, über welches ein jeweiliger Dienstanbieter mit einem jeweiligen einen Dienst von dem jeweiligen Dienstanbieter nutzenden Endnutzer verbunden wird. Dabei werden die mehreren Dienstanbieter über jeweilige den jeweiligen Dienstanbietern zuordenbare Zuleitungen zu einem gemeinsamen ersten Koppelpunkt an das optische Zugangsnetz angekoppelt. Ferner wird ein jeweiliger Dienstanbieter über eine jeweilige von einem gemeinsamen zweiten Koppelpunkt abzweigende Anschlussleitung jeweils mit einem jeweiligen einen Dienst von dem jeweiligen Dienstanbieter nutzenden Endnutzer verbunden. Dabei sind der erste Koppelpunkt und der zweite Koppelpunkt über eine Hauptleitung bzw. einen Hauptkanal miteinander verbunden. In einer jeweiligen Zuleitung eines jeweiligen Dienstanbieters zu dem optischen Zugangsnetz wird eine jeweilige dem jeweiligen Dienstanbieter zuordenbare dienstanbieterseitige Überwachungseinheit vorgesehen. Ferner wird in dem Hauptstrang zwischen erstem Koppelpunkt und zweitem Koppelpunkt eine netzseitige Überwachungseinheit vorgesehen, wobei die netzseitige Überwachungseinheit und die jeweiligen dienstanbieterseitigen Überwachungseinheiten jeweilig mit einer zentralen Kontroll- und Steuereinheit verbunden werden, wobei die zentrale Kontroll- und Steuereinheit von den Überwachungseinheiten erfasste Daten aufnimmt, speichert und zentral auswertet.

Das erfindungsgemäße Verfahren ermöglicht eine Isolation verschiedener Service Provider auf Netzinfrastrukturebene. Dadurch ist ein gemeinsamer Betrieb mehrerer Service Provider über eine gleiche Netzinfrastruktur, d. h. insbesondere Fasernetzinfrastruktur, bis auf eine einzelne Faser möglich, ohne dass sich die Service Provider gegenseitig stören können oder untereinander abstimmen müssen. Der NIP wird hierdurch in die Lage versetzt, unabhängig von den Service Providern einen robusten und sicheren Betrieb auf seiner Fasernetzinfrastruktur zu gewährleisten, Fehler und Störungen schnell zu identifizieren und zu isolieren. Weiterhin wird es hierdurch möglich, Arbeiten an der Fasernetzinfrastruktur weitgehend autark durchzuführen, ohne jeden einzelnen Service Provider einzubinden, da eine Einhaltung der Laserklasse 1M sichergestellt werden kann. Nur der die Störung verursachende Service Provider bzw. der vom Störfall betroffene Service Provider muss involviert werden. Eine Einhaltung vereinbarter Parameter wird durch eine zentrale Überwachung in Form der zentralen Kontroll- und Steuereinheit, die alle wesentlichen technischen Parameter, wie Leistung und Wellenlänge aller angeschlossenen Ports bzw. Zuleitungen über die dienstanbieterseitigen Überwachungseinheiten erfasst und auswertet, ermöglicht, wobei auch ein Vergleich der Messwerte bzw. Parameter mit Vorgabewerten sichergestellt werden kann. Weiterhin wird eine Gesamtleistung am netzseitigen Koppelpunkt, d. h. an dem ersten Koppelpunkt, gemessen. Aus den gewonnenen Daten kann die zentrale Kontroll- und Steuereinheit Fehler und Störungen bzw. Fehlkonfigurationen oder Fehlverhalten einzelner Elemente innerhalb der Netzinfrastruktur bzw. des optischen Zugangsnetzes identifizieren. Im Störungsfall können dann einzelne Ports, auf denen Service Provider angeschlossen sind, gezielt abgeschaltet werden. Das erfindungsgemäße Verfahren realisiert ferner drei Ziele, die einen Betrieb der Fasernetzinfrastruktur des NIP getrennt von den Service Providern ermöglichen bzw. vereinfachen:
1. Gesamtleistungsüberwachung mit dem Ziel der Einhaltung der Laserklasse 1M
2. Überwachung auf Einhaltung der Wellenlänge
3. Überwachung auf Leistung pro Wellenlänge

Ferner kann eine Abschaltung und eine dazu notwendige Koordination mit den anderen Service Providern durch den NIP, wenn Arbeiten am Netz des NIP notwendig werden, vermieden werden.

In möglicher Ausgestaltung speichert die erfindungsgemäß vorgesehene zentrale Kontroll- und Steuereinheit die von den Überwachungseinheiten erfassten Daten in einer Speichereinheit und vergleicht diese jeweilig zur zentralen Auswertung mit in der Speichereinheit abgelegten Referenzwerten bzw. Vorgabewerten.

In weiterer Ausgestaltung wird als erster Koppelpunkt ein Wellenlängenmultiplexer, insbesondere ein AWG (Arrayed Waveguide Grating), gewählt.

In noch weiterer Ausgestaltung wird als zweiter Koppelpunkt ein passiver optischer Leistungskoppler oder ein WDM De-/Multiplexer gewählt. Ein Multiplexer ist eine Selektionsschaltung in der analogen und digitalen Elektronik, mit der aus einer Anzahl von Eingangssignalen eines ausgewählt und an einen Ausgang durchgeschaltet werden kann. Bei einer Signalübertragung mit Lichtleitern werden optische Multiplexer und Demultiplexer eingesetzt, die mit optischen Schaltern oder beim Wellenlängenmultiplexverfahren mit wellenlängenselektiven Elementen arbeiten. Das Gegenstück zum Multiplexer ist der Demultiplexer, mit dem die zusammengefassten Datenkanäle wieder aufgetrennt werden. Analoge Multiplexer, wie hier bspw. einsetzbar, arbeiten bidirektional, d. h. sie können auch als Demultiplexer verwendet werden.

In noch weiterer Ausgestaltung des erfindungsgemäßen Verfahrens wird anhand der erfassten Daten überprüft, ob bei einem gemeinsamen Betrieb des optischen Zugangsnetzes für die Zuleitungen der mehreren Dienstanbieter in Summe und/oder für die Hauptleitung bzw. den Hauptkanal die Laserklasse 1M erfüllt wird.

Gemäß einer noch weiteren Ausgestaltung des erfindungsgemäßen Verfahrens wird anhand der erfassten Daten überprüft, ob den jeweiligen Dienstanbietern zugewiesene bzw. vereinbarte technische Betriebsparameter, insbesondere Wellenlängen, Wellenlängenbereiche und/oder Leistung pro Wellenlänge bzw. Wellenlängenbereich, d. h. pro Kanal bzw. Kanalbündel, eingehalten werden.

Ferner werden anhand der erfassten Daten fehlerhafte Netzkonfigurationen des optischen Zugangsnetzes und/oder fehlerhafte Zusammenschaltungen und/oder fehlerhaft arbeitende Netzelemente, insbesondere Wellenlängenkoppler, Filter etc. ermittelt.

In möglicher Ausgestaltung des erfindungsgemäßen Verfahrens überwacht die zentrale Kontroll- und Steuereinheit anhand der erfassten Daten Zuleitungen der mehreren Dienstanbieter einzeln und zentral und erkennt im Fehlerfall eine Fehlkonfiguration und/oder ein Fehlverhalten mindestens einer Zuleitung, identifiziert diese betroffene Zuleitung und schaltet diese gezielt ab.

Gemäß einer noch weiteren Ausführungsform des erfindungsgemäßen Verfahrens wird die netzseitige Überwachungseinheit auf dem Hauptkanal zwischen erstem Koppelpunkt und zweitem Koppelpunkt als passiver Leistungsteiler mit daran angeschlossenem Leistungsmesser ausgeführt, wobei ein Teil der eingespeisten Leistung mittels des Leistungsteilers ausgekoppelt und mittels des Leistungsmessers bestimmt und der zentralen Kontroll- und Steuereinheit mitgeteilt wird.

In noch weiterer Ausgestaltung wird eine jeweilige dem jeweiligen Dienstanbieter zuordenbare dienstanbieterseitige Überwachungseinheit ebenfalls als passiver Leistungsteiler mit daran angeschlossenem Leistungsmesser ausgeführt, wobei ein Teil der eingespeisten Leistung mittels des Leistungsteilers ausgekoppelt und mittels des Leistungsmessers bestimmt und ebenfalls der zentralen Kontroll- und Steuereinheit mitgeteilt wird. Ferner wird anhand des ausgekoppelten Teils der eingespeisten Leistung mittels des Leistungsteilers eine Wellenlänge für den jeweiligen Dienstanbieter mittels einer Wellenlängen-Analyseeinheit bestimmt und der zentralen Kontroll- und Steuereinheit mitgeteilt.

In möglicher Ausgestaltung wird der mit dem jeweiligen passiven Leistungsteiler für den jeweiligen Dienstanbieter verbundene Leistungsmesser als allen an den ersten Koppelpunkt angekoppelten Dienstanbietern zugeordneter übergeordneter Leistungsmesser ausgeführt, der mit den jeweiligen passiven Leistungsteilern der jeweiligen Dienstanbieter über eine insbesondere optische Schalteinheit verbunden wird. Dabei ist es denkbar, dass die Wellenlängen-Analyseeinheit ebenfalls als allen an den ersten Koppelpunkt angekoppelten Dienstanbietern zugeordnete übergeordnete Wellenlängen-Analyseeinheit ausgeführt wird, die mit den jeweiligen passiven Leistungsteilern der jeweiligen Dienstanbieter über die insbesondere optische Schalteinheit verbunden wird.

Dabei werden in weiterer Ausgestaltung Messungen des Leistungsmessers bzw. der jeweiligen Leistungsmesser und/oder der Wellenlängen-Analyseeinheit bzw. der jeweiligen Wellenlängen-Analyseeinheiten über eine dem Leistungsmesser bzw. über eine jeweilige den jeweiligen Leistungsmessern nachgeschaltete Auswerte- und Leitungssteuerungseinheit ausgewertet, und die Auswertungen werden der zentralen Kontroll- und Steuereinheit und gezielt mindestens einer Auswahl von den jeweiligen Dienstanbietern zugeordneten Leitungsbeeinflussungselementen übermittelt.

In weiterer Ausgestaltung steuern die Leitungsbeeinflussungselemente der Auswahl der jeweiligen Dienstanbieter wahlweise durch Dämpfung und/oder geeignete Schalter die von den jeweiligen Dienstanbietern in den ersten Koppelpunkt jeweils eingespeiste Leistung und/oder weitere Parameter, wie Wellenlänge, etc. auf Basis der übermittelten Auswertung.

Ferner betrifft die vorliegende Erfindung ein System zur automatischen Überwachung von Betriebsparametern in mehreren eine gemeinsame Fasernetzinfrastruktur nutzenden Telekommunikationsnetzen von entsprechend mehreren Dienstanbietern. Dabei nutzen die mehreren Telekommunikationsnetze ein gemeinsames optisches Zugangsnetz, über welches ein jeweiliger Dienstanbieter mit einem jeweiligen einen Dienst von dem jeweiligen Dienstanbieter nutzenden Endnutzer verbunden ist. Dabei sind die mehreren Dienstanbieter über jeweilige den jeweiligen Dienstanbietern zuordenbare Zuleitungen zu einem gemeinsamen ersten Koppelpunkt an das optische Zugangsnetz angekoppelt. Ein jeweiliger Dienstanbieter ist jeweils mit einem jeweiligen einen Dienst von dem jeweiligen Dienstanbieter nutzenden Endnutzer über eine von einem gemeinsamen zweiten Koppelpunkt abzweigende jeweilige dem jeweiligen Endnutzer zuordenbare Anschlussleitung verbunden. Der erste Koppelpunkt und der zweite Koppelpunkt sind über eine gemeinsame Hauptleitung miteinander verbunden, wobei in einer jeweiligen Zuleitung eines jeweiligen Dienstanbieters zu dem optischen Zugangsnetz eine jeweilige dem jeweiligen Dienstanbieter zuordenbare dienstanbieterseitige Überwachungseinheit angeordnet ist. Ferner ist in der Hauptleitung zwischen erstem Koppelpunkt und zweitem Koppelpunkt eine netzseitige Überwachungseinheit angeordnet. Die netzseitige Überwachungseinheit und die jeweiligen dienstanbieterseitigen Überwachungseinheiten sind jeweilig mit einer zentralen Kontroll- und Steuereinheit verbunden, wobei die zentrale Kontroll- und Steuereinheit dazu ausgelegt ist, von den Überwachungseinheiten erfasste Daten aufzunehmen, zu speichern, zentral auszuwerten und auf Basis der zentral ausgewerteten Daten Einfluss auf eine Steuerung von einer in das Zugangsnetz einspeisbaren Leistung zu nehmen.

Gemäß einer Ausführungsform des erfindungsgemäßen Systems ist die netzseitige Überwachungseinheit auf der Hauptleitung zwischen dem ersten Koppelpunkt und zweiten Koppelpunkt als passiver Leistungsteiler mit daran angeschlossenem Leistungsmesser ausgeführt. Dabei ist der Leistungsteiler dazu konfiguriert, einen Teil der eingespeisten Leistung auszukoppeln, und der Leistungsmesser ist dazu konfiguriert, die Leistung zu bestimmen und der zentralen Kontroll- und Steuereinheit mitzuteilen.

In weiterer Ausgestaltung ist eine jeweilige einem jeweiligen Dienstanbieter zuordenbare dienstanbieterseitige Überwachungseinheit ebenfalls als passiver Leistungsteiler mit daran angeschlossenem Leistungsmesser ausgeführt. Dabei ist der passive Leistungsteiler dazu konfiguriert, einen Teil der eingespeisten Leistung auszukoppeln, und der Leistungsmesser ist dazu konfiguriert, die von dem Leistungskoppler ausgekoppelte Leistung zu bestimmen und der zentralen Kontroll- und Steuereinheit mitzuteilen.

Ferner umfasst das System in Ausgestaltung mindestens eine Wellenlängen-Analyseeinheit, die dazu konfiguriert ist, anhand des von dem Leistungsteiler ausgekoppelten Teils der von dem jeweiligen Dienstanbieter eingespeisten Leistung eine Wellenlänge für den jeweiligen Dienstanbieter zu bestimmen und der zentralen Kontroll- und Steuereinheit mitzuteilen.

In weiterer Ausgestaltung des erfindungsgemäßen Systems ist der mit dem jeweiligen passiven Leistungsteiler für den jeweiligen Dienstanbieter verbundene Leistungsmesser als allen an den ersten Koppelpunkt angekoppelten Dienstanbietern zugeordneter übergeordneter Leistungsmesser ausgeführt, der mit den jeweiligen passiven Leistungsteilern der jeweiligen Dienstanbieter über eine, insbesondere optische, Schalteinheit verbunden ist.

In noch weiterer Ausgestaltung ist die Wellenlängen-Analyseeinheit als allen an den ersten Koppelpunkt angekoppelten Dienstanbietern zugeordnete übergeordnete Wellenlängen-Analyseeinheit ausgeführt, die mit den jeweiligen passiven Leistungsteilern der jeweiligen Dienstanbieter über die, insbesondere optische, Schalteinheit verbunden ist.

Gemäß einer weiteren Ausführungsform des erfindungsgemäßen Systems ist dem Leistungsmesser bzw. den jeweiligen Leistungsmessern und/oder der Wellenlängen-Analyseeinheit bzw. den jeweiligen Wellenlängen-Analyseeinheiten eine Auswerte- und Leitungssteuerungseinheit bzw. eine jeweilige Auswerte- und Leitungssteuerungseinheit nachgeschaltet, die dazu ausgelegt ist, Messungen des Leistungsmessers bzw. der jeweiligen Leistungsmesser und/oder der Wellenlängen-Analyseeinheiten bzw. der jeweiligen Wellenlängen-Analyseeinheiten auszuwerten und die Auswertungen der zentralen Kontroll- und Steuereinheit und/oder gezielt, insbesondere durch eine nochmalige Auswertung durch die zentrale Kontroll- und Steuereinheit ggf. modifiziert, mindestens einer Auswahl von jeweiligen Dienstanbietern zugeordneten Leitungsbeeinflussungselementen zu übermitteln.

In noch weiterer Ausgestaltung des erfindungsgemäßen Systems sind die den jeweiligen Dienstanbietern zugeordneten Leitungsbeeinflussungselemente dazu konfiguriert, wahlweise durch Dämpfung und/oder geeignete Schalter die von den jeweiligen Dienstanbietern in den ersten Koppelpunkt jeweils eingespeiste Leistung und/oder andere Parameter, wie Wellenlänge etc., auf Basis der übermittelten Auswertung zu steuern. Ferner können über die jeweiligen Leitungsbeeinflussungselemente jeweilige Ports von jeweiligen Dienstanbietern gezielt abgeschaltet werden, falls in einer jeweiligen Zuleitung ein Fehler detektiert wird.

Demnach wird erfindungsgemäß auf einem Hauptstrang bzw. einer Hauptleitung des optischen Zugangsnetzes in dem Telekommunikationsnetz des NIP eine netzseitige Überwachungseinheit installiert. In den Zuleitungen der einzelnen Service Provider zum Netz des NIP bzw. zu dem optischen Zugangsnetz werden jeweilige dienstanbieterseitige Überwachungseinheiten eingeführt. Ferner wird eine zentrale Kontroll- und Steuereinheit eingeführt, die die Daten, die beim jeweiligen Überwachen durch die jeweiligen Überwachungseinheiten erfasst wurden, übernimmt, speichert und vorzugsweise mit in einer Datenbank abgelegten Referenzwerten vergleicht. Durch eine derartige Datenauswertung können bspw. im Fehlerfall Fehleridentifikationen und eine Fehlerlokalisierung schneller als entsprechend dem eingangs beschriebenen Stand der Technik erfolgen. Sowohl auf einem netzseitigen Abschluss des ersten Koppelpunkts, der bspw. als Arrayed Waveguide Grating ausgebildet sein kann, als auch auf den jeweiligen den Dienstanbietern zugewandten Anschlüssen des ersten Koppelpunkts kann mittels eines vorgesehenen passiven Leistungsteilers ein geringer Teil der eingespeisten Leistung ausgekoppelt und mittels jeweiliger Leistungsmesser bestimmt werden. Das bedeutet, dass auf einem dem Netz zugewandten Anschluss des ersten Koppelpunkts eine netzseitige Überwachungseinheit in Form einer Leistungsmesseinrichtung vorgesehen ist, die dazu ausgebildet ist, aus der insgesamt durchlaufenden Leistung einen Teil über einen passiven Leistungsteiler auszukoppeln, d. h. einen gewissen Prozentsatz der den Anschluss insgesamt durchlaufenden Gesamtleistung abzusplitten und einem Leistungsmesser zuzuführen. In gleicher Weise sind auf den jeweiligen Zuleitungen eines jeweiligen Dienstanbieters zu dem ersten Koppelpunkt jeweilige dienstanbieterseitige Überwachungseinheiten in Form von jeweiligen Leistungsmesseinrichtungen vorgesehen, die ebenfalls einen passiven Leistungsteiler umfassen, der dazu ausgelegt ist, aus der die jeweilige Zuleitung durchlaufenden Gesamtleistung einen Teil der Gesamtleistung auszukoppeln und einem jeweiligen Leistungsmesser zur Messung der ausgekoppelten Leistung zuzuführen. Die Leistungsmesseinrichtung am netzseitigen Abschluss des ersten Koppelpunkts kann gleich ausgeführt sein wie die jeweiligen Leistungsmesseinrichtungen in den jeweiligen Zuleitungen der einzelnen Dienstanbieter zu dem ersten Koppelpunkt. Man bezeichnet einen jeweiligen Anschluss eines Dienstanbieters am ersten Koppelpunkt auch als dienstanbieterseitigen Port. Durch diese Leistungsmesseinrichtung kann sowohl die Leistung als auch die Wellenlänge bestimmt werden. Alternativ zu der Einrichtung einer jeweiligen Leistungsmesseinrichtung an jedem dienstanbieterseitigen Port des ersten Koppelpunkts ist es auch denkbar, um Kosten der Überwachung für den NIP zu reduzieren, in jeder Zuleitung eines jeweiligen Dienstanbieters zu dem ersten Koppelpunkt einen Leistungsteiler, insbesondere einen passiven Leistungsteiler, vorzusehen, wobei alle Leistungsteiler aus den jeweiligen Zuleitungen der jeweiligen Dienstanbieter zu dem ersten Koppelpunkt zu einem gemeinsamen Leistungsmesser geleitet werden, so dass der gemeinsame Leistungsmesser je nach Ansteuerung stets nur eine aus einer Zuleitung eines unter der Mehrzahl an Dienstanbietern ausgekoppelte Leistung misst und ggf. eine Spektrumanalyse bzw. eine Bestimmung einer Wellenlänge vornimmt. Das bedeutet, dass eine Vielzahl von Leistungsmessern eingespart werden kann, jedoch eine Steuerung vorzusehen ist, die regelt, welcher ausgekoppelte Teil von Leistung aus welcher Zuleitung eines Dienstanbieters zu dem ersten Koppelpunkt dem Leistungsmesser zu einem gegebenen Zeitpunkt zugeführt wird. Die Auswertung des Leistungsmessers über eine Leistungsauskopplung aus einer jeweiligen Zuleitung eines jeweiligen Dienstanbieters wird zur Leistungsbeeinflussung über Schalter und/oder Dämpfer wiederum der jeweiligen Zuleitung des jeweiligen Dienstanbieters zugeführt. Alternativ oder zusätzlich wird diese Auswertung auch an die zentrale Kontroll- und Steuereinheit übermittelt. Die Steuerung darüber, welche Zuleitung bzw. welcher ausgekoppelte Teil Leistung aus welcher Zuleitung welches Dienstanbieters zu dem ersten Koppelpunkt über den gemeinsamen Leistungsmesser gemessen wird, erfolgt in der Regel über einen optischen Schalter.

Demnach gibt es entsprechend der Mehrzahl von Zuleitungen, die jeweilig entsprechend einer Mehrzahl von Dienstanbietern zugeordnet sind, eine Mehrzahl von Abzweigungen zu dem optischen Schalter. Das heißt, bei N Zuleitungen zu dem ersten Koppelpunkt sind N Abzweigungen zu dem optischen Schalter ausgehend von den jeweiligen Leistungsteilern vorzusehen, die eine Auskopplung von Leistung aus einer jeweiligen Zuleitung eines jeweiligen Dienstanbieters steuern. Der optische Schalter hat demnach bei N Dienstanbietern bzw. N Zuleitungen N Eingänge und einen Ausgang, wobei die N Eingänge bspw. zyklisch durchgeschaltet werden, so dass immer ein Eingang der N Eingänge mit dem Ausgang verbunden ist. Das eine jeweils über den Ausgang letztlich ausgekoppelte Signal wird über einen weiteren Verzweigungspunkt sowohl dem übergeordneten Leistungsmesser als auch der übergeordneten Wellenlängenund Analyseeinheit übermittelt, wobei deren jeweilige Messwerte an mindestens eine nachgeschaltete Auswerte- und Leitungssteuerungseinheit weitergeleitet werden. In jeder Zuleitung eines jeweiligen Dienstanbieters zu dem ersten Koppelpunkt sind neben dem vorgesehenen passiven Koppler bzw. dem passiven Leistungsteiler, der einen Teil der insgesamt die Zuleitung durchlaufenden Leistung auskoppelt, eine jeweilige Einheit zur Leitungs- bzw. Zuleitungsbeeinflussung in Form von Schaltern und/oder Dämpfern vorgesehen, die wiederum mit der allen Dienstanbietern übergeordneten Auswerte- und Leitungssteuerungseinheit angesteuert werden. Die Verbindung zwischen Leitungsbeeinflussungselement und Auswerte- und Leitungssteuerungseinheit erfolgt in der Regel über einen Steuerungsbus. Es ist möglich, dass der optische Schalter zyklisch geschaltet wird, so dass zyklisch jeweilige Zuleitungen der Dienstanbieter überwacht werden und zyklisch aus diesen jeweiligen Zuleitungen Leistungen ausgekoppelt, gemessen und analysiert werden.

Durch eine Leistungsmessung an jeweiligen Dienstanbieteranschlüssen des ersten Koppelpunkts können bspw., ohne Anspruch auf Vollständigkeit, folgende Fehler und Konfliktfälle gelöst werden.
1. Eingespeiste Leistung eines jeweiligen Dienstanbieters überschreitet einen vereinbarten Wert. Über die vorgesehene Implementierung kann durch eine Leistungsmessung eine Überschreitung der vereinbarten Leistung identifiziert und entsprechende Maßnahmen eingeleitet werden. Dies könnten z. B. eine Trennung einer Verbindung oder eine Dämpfung der eingespeisten Leistung sein. Ferner wird automatisch der entsprechende Dienstanbieter informiert.
2. Ein beliebiger Dienstanbieter speist ein Signal der Wellenlänge X an einem falschen Anschluss Y ein, bspw. ein fehlerhafter Patch bzw. ein falscher Transceiver. Durch die erfindungsgemäß vorgesehene Wellenlängenmessung können diese Fehler identifiziert werden, und der betroffene Dienstanbieter kann automatisch informiert werden.
3. Ein Dienstanbieter speist ein Signal an einem Port bzw. Anschluss ein, für den es keine vertragliche Vereinbarung gibt. Mittels Leistungsmessung und/oder Wellenlängenmessung kann ein derartiges Szenario identifiziert werden und eine Übertragung unterbunden werden. Ebenfalls kann hier eine automatische Information an den entsprechenden Dienstanbieter erfolgen.
4. Ein Dienstanbieter speist ein Signal einer Wellenlänge X* an einem richtigen Anschluss X ein, allerdings weicht X* von der vorgesehenen Lage ab, so dass das Signal durch die Kopplereinheit so beeinflusst wird, dass keine ordnungsgemäße Übertragung stattfinden kann, bspw. durch Dämpfung des Signals oder von Signalanteilen. Durch die erfindungsgemäß vorgesehene Wellenlängenmessung kann eine derartige Abweichung erkannt werden und der entsprechende Dienstanbieter automatisch informiert werden.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in den Zeichnungen schematisch dargestellt und wird im Folgenden unter Bezugnahme auf die Zeichnungen ausführlich beschrieben.

### Kurze Beschreibung der Zeichnungen

Figur 1 zeigt in schematischer Darstellung eine mögliche Ausführungsform des erfindungsgemäßen Systems zur Durchführung einer Ausführungsform des erfindungsgemäßen Verfahrens.
Figur 2 zeigt in schematischer Darstellung in Detailansicht einen Ausschnitt einer weiteren Ausführungsform des erfindungsgemäßen Systems.
Figur 3 zeigt in schematischer Darstellung eine erste Ausführungsform einer erfindungsgemäß vorgesehenen jeweiligen einem jeweiligen Dienstanbieter zuordenbaren dienstanbieterseitigen Überwachungseinheit.
Figur 4 zeigt in schematischer Darstellung eine zu der in Figur 3 gezeigten Ausführungsform alternative Ausführungsform einer dienstanbieterseitigen Überwachungseinheit mit jeweiligen dienstanbieterseitigen Leistungsteilern und einem allen dienstanbieterseitigen Leistungsteilern zugeordneten Leistungsmesser.
Figur 5 zeigt in schematischer Darstellung ein passives optisches Netz bei exklusiver Nutzung der physikalischen Infrastruktur durch einen Service Provider, wie es aus dem Stand der Technik bekannt ist.
Figur 6 zeigt eine aus dem Stand der Technik bekannte Anordnung eines passiven optischen Netzes mit Netzinfrastrukturprovider und mehreren Service Providern.

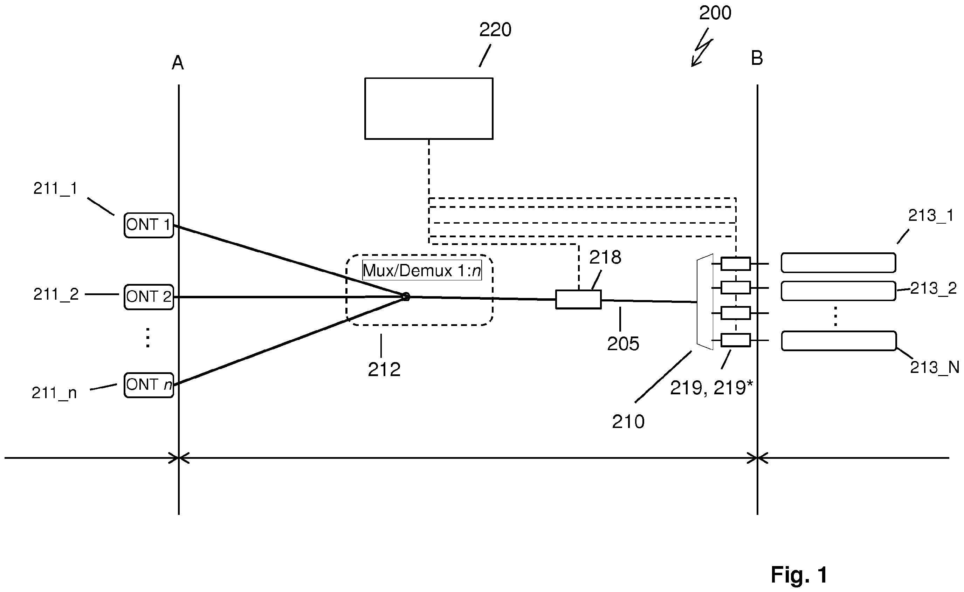

Figur 1 zeigt ein optisches Zugangsnetz 200, welches eine durch die zwei senkrechten Linien A und B schematisch begrenzte Fasernetzinfrastruktur umfasst, die von einem NIP überwacht und gesteuert wird. Das Zugangsnetz 200 umfasst einen ersten Koppelpunkt 210 in Form bspw. eines Arrayed Waveguide Grating, an dem über eine Vielzahl von Ports bzw. von Anschlüssen eine Mehrzahl von Dienstanbietern 213_1, 213_2, ..., 213_N angebunden ist. Das bedeutet, dass die jeweiligen Dienstanbieter über diesen ersten Koppelpunkt 210 Zugang zu dem Zugangsnetz 200 erhalten. Der erste Koppelpunkt 210 ist über eine Hauptleitung 205 mit einem zweiten Koppelpunkt 212 verbunden. Der zweite Koppelpunkt 212 kann als passiver optischer Leistungskoppler oder als WDM De-/Multiplexer ausgebildet sein. Über diesen zweiten Koppelpunkt 212 sind über einen jeweiligen optischen Netzanschluss (ONT) jeweilige Endnutzer 211_1, 211_2, ..., 211_n angekoppelt, die über eine Verbindung zwischen zweitem Koppelpunkt 212 und erstem Koppelpunkt 210 letztlich einem Dienstanbieter 213_1, 213_2, ..., 213_N zugeordnet werden können bzw. von diesem Dienste anfordern und abrufen können. Auf der Hauptleitung 205 zwischen erstem Koppelpunkt 210 und zweitem Koppelpunkt 212 ist eine netzseitige Überwachungseinheit 218 vorgesehen. Ferner sind auf den jeweiligen Zuleitungen eines jeweiligen Dienstanbieters 213_1, 213_2, ..., 213_N zu dem ersten Koppelpunkt 210 jeweilige dienstanbieterseitige Überwachungseinheiten 219, 219* angeordnet. Sowohl die netzseitige Überwachungseinheit 218 als auch die jeweiligen dienstanbieterseitigen Überwachungseinheiten 219, 219* sind jeweilig mit einer zentralen Kontroll- und Steuereinheit 220 verbunden. Die zentrale Kontroll- und Steuereinheit 220 ist dazu konfiguriert, die von den Überwachungseinheiten 218 bzw. 219, 219* erfassten Daten aufzunehmen, zu speichern, zentral auszuwerten und ggf. auf Basis der zentral ausgewerteten Daten Einfluss auf eine Steuerung von einer in das Zugangsnetz 200 einspeisbaren Leistung zu nehmen.

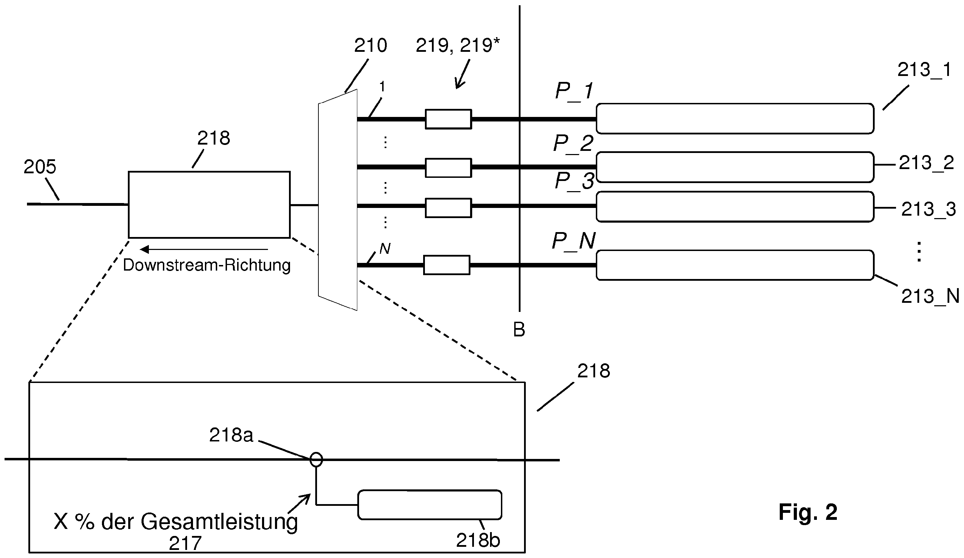

Figur 2 zeigt im Detail eine mögliche Ausführungsform einer netzseitigen Überwachungseinheit 218. Die netzseitige Überwachungseinheit 218 ist, wie voranstehend erwähnt, in dem Hauptstrang 205 zwischen erstem Koppelpunkt 210 und zweitem hier nicht gezeigten Koppelpunkt 212 innerhalb des Zugangsnetzes 200 angeordnet. Die netzseitige Überwachungseinheit 218 kann auch als Leistungsmesseinrichtung bezeichnet werden, die einen passiven Koppler bzw. einen passiven Leistungsteiler 218a umfasst, der dazu ausgelegt ist, einen geringen Teil der insgesamt eingespeisten und den Hauptstrang 205 durchlaufenden Leistung auszukoppeln und einem ferner von der Überwachungseinheit 218 umfassten Leistungsmesser 218b zuzuführen. Der Leistungsmesser 218b bestimmt den ausgekoppelten Teil der Leistung und übermittelt die dabei aufgenommenen Daten über eine entsprechende Zuleitung, drahtgebunden und/oder kabellos, insbesondere per Funk, der zentralen Kontroll- und Steuereinheit 220, wie dies in Figur 1 durch gestrichelte Linie dargestellt ist. Das bedeutet, dass die netzseitige Überwachungseinheit 218, wie in Figur 2 im unteren Bereich dargestellt, einen passiven Koppler 218a und einen damit verbundenen Leistungsmesser 218b umfasst. Der passive Koppler 218a ist in der Hauptleitung 205 verortet, kann jedoch über eine davon abzweigende Leitung 217 einen Teil der Leistung auskoppeln und an den Leistungsmesser 218b weiterleiten.

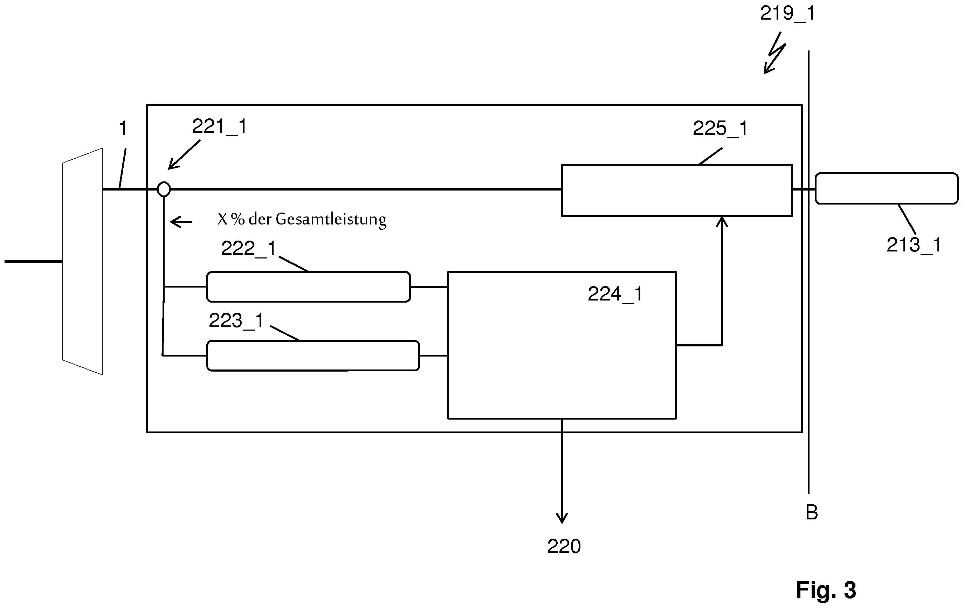

Figur 3 zeigt ein Detailbild einer Ausführungsform einer Überwachungseinheit 219, wie sie auf Seiten der Dienstanbieter in einer jeweiligen Zuleitung 1, ..., N eines jeweiligen Dienstanbieters 213_1, 213_2, ..., 213_N zu dem ersten Koppelpunkt 210 vorgesehen ist. Figur 3 zeigt stellvertretend für alle Dienstanbieter eine Überwachungseinheit 219_1 für Dienstanbieter 213_1. Sind bspw. N Dienstanbieter an dem ersten Koppelpunkt 210 angebunden, so gibt es entsprechend N Zuleitungen 1, ..., N von den jeweiligen Dienstanbietern 213_1, 213_2, ..., 213_N. Über jeweilige Zuleitungen 1, 2, ..., N wird eine jeweilige Leistung P_1, P_2, ..., P_N eingespeist und dem ersten Koppelpunkt 210 übermittelt. Auf den jeweiligen Zuleitungen 1, 2, ..., N wird nunmehr jeweils eine Überwachungseinheit 219_1, 219_2, ..., 219_N vorgesehen. Jede der Überwachungseinheiten 219_1, 219_2, ..., 219_N umfasst, wie in Figur 3 am Beispiel der Überwachungseinheit 219_1 dargestellt, einen passiven Koppler 221_1, der in der jeweiligen Zuleitung 1, 2, ..., N, hier im Falle von Dienstanbieter 213_1 in der Zuleitung 1 eingebunden ist und dazu ausgelegt ist, die die Zuleitung durchlaufende Leistung aufzuspalten in eine auf den Koppelpunkt 210 zugehende Leistung und einen ausgekoppelten Teil von X % der Gesamtleistung. Dieser ausgekoppelte Teil wird nunmehr einem Leistungsmesser 222_1 und einer Spektrumanalyseeinheit bzw. einem Wellenlängenmesser bzw. einer Wellenlängen-Analyseeinheit 223_1 zugeführt. Die gemessenen Daten seitens des Leistungsmessers 222_1 bzw. die gemessenen Wellenlängen seitens des Wellenlängenmessers 223_1 werden einer Auswerte- und Leitungssteuerungseinheit 224_1 zugeführt, die wiederum verbunden ist mit der zentralen Kontroll- und Steuereinheit 220 und ferner mit einem in der jeweiligen Zuleitung sich befindenden Leitungsbeeinflussungselement 225_1. Das Leitungsbeeinflussungselement 225_1 ist in der Lage, die die Zuleitung durchlaufende Leistung durch Schalter und Dämpfer derart zu beeinflussen, dass eine Korrektur vorgenommen werden kann.

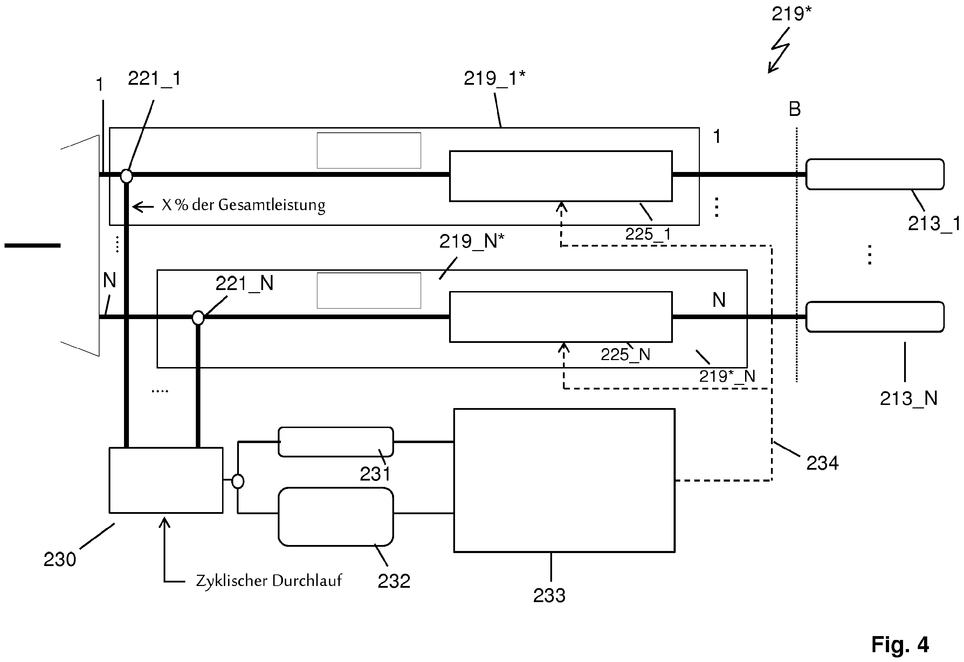

Figur 4 zeigt eine alternative Ausgestaltung der Überwachungseinheit 219* auf Seiten der Dienstanbieter, wobei hier vorgesehen ist, dass auf Dienstanbieterseite in einer jeweiligen Zuleitung 1, ..., N ein jeweiliger passiver Koppler bzw. ein Leistungsteiler 221_1, 221_2, ..., 221_N als jeweiliger Teil einer jeweiligen dienstanbieterseitigen Überwachungseinheit 219_1*, ..., 219_N* umfasst ist, der jeweilige Leistungsteiler 221_1, 221_2, ..., 221_N durch eine Ansteuerung mittels eines ferner vorgesehenen optischen Schalters 230 bspw. in zyklischer Abfolge einen Teil der eine jeweilige Zuleitung durchlaufenden Leistung auskoppelt und einem für alle dienstanbieterseitigen Zuleitungen gemeinsamen Leistungsmesser 231 bzw. Wellenlängenmesser 232 zuleitet, der bzw. die die aufgenommenen Daten einer übergeordneten Auswerte- und Leitungssteuerungseinheit 233 übermitteln. Die übergeordnete Auswerte- und Leitungssteuerungseinheit 233 ist ebenfalls verbunden mit der zentralen Kontroll- und Steuereinheit 220 und ferner über einen Steuerungsbus 234, wie hier gestrichelt dargestellt, mit jeweiligen Leitungsbeeinflussungselementen 225_1, 225_2, ..., 225_N der jeweiligen dienstanbieterseitigen Überwachungseinheiten 219_1*, ..., 219_N*. Der optische Schalter 230 ist dazu ausgelegt, zeitlich nacheinander, bspw. in zyklischer Abfolge, die in den jeweiligen Zuleitungen der jeweiligen Dienstanbieter vorgesehenen passiven Koppler 221_1, 221_2, ..., 221_N so zu schalten, dass diese jeweils nacheinander, insbesondere in zyklischer Reihenfolge, einen Teil der Gesamtleistung durch die jeweilige Zugangsleitung auskoppeln und über den optischen Schalter 230 sowohl dem Leistungsmesser 231 als auch der Wellenlängen- und Analyseeinheit 232 zuführen. Über einen gemeinsam vorgesehenen optischen Schalter 230 und einen gemeinsam vorgesehenen optischen Leistungsmesser 231 bzw. Wellenlängenmesser 232 und darüber hinaus über eine gemeinsame Auswerte- und Leitungssteuerungseinheit 233 für alle Zuleitungen der jeweiligen Dienstanbieter können Kosten der Überwachung für den NIP eingespart werden.

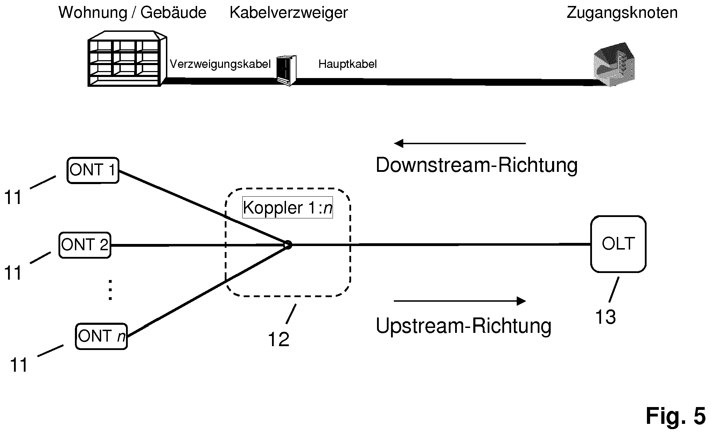

Figur 5 zeigt ein Szenario, wie es aus dem Stand der Technik bekannt ist. Im oberen Bereich von Figur 5 ist eine bildliche Abbildung einer Verbindung zwischen einem Endnutzer, wie bspw. einer Wohnung bzw. einem Gebäude, und einem Zugangsknoten zu einem Kommunikationsnetz dargestellt. Im unteren Bereich ist in schematischer Darstellung die technische Ankopplung bzw. Realisierung dargestellt. In der Regel befindet sich das gesamte optische Zugangsnetz inklusive Faserinfrastruktur in der Hoheit eines Service Providers 13, so dass dieser direkt angeschlossene potentielle Kunden 11 mit Diensten bzw. Inhalten versorgen kann. Dabei überwacht der Service Provider 13 sein eigenes Netz. Über einen Koppelpunkt 12, der bspw. als De-/Multiplexer ausgeführt sein kann, können eine Mehrzahl optischer Netzanschlüsse 11 angekoppelt werden, wobei der Koppelpunkt 12 wiederum über ein Hauptkabel mit dem Zugangsknoten 13 des Service Providers bzw. des Dienstanbieters verbunden ist.

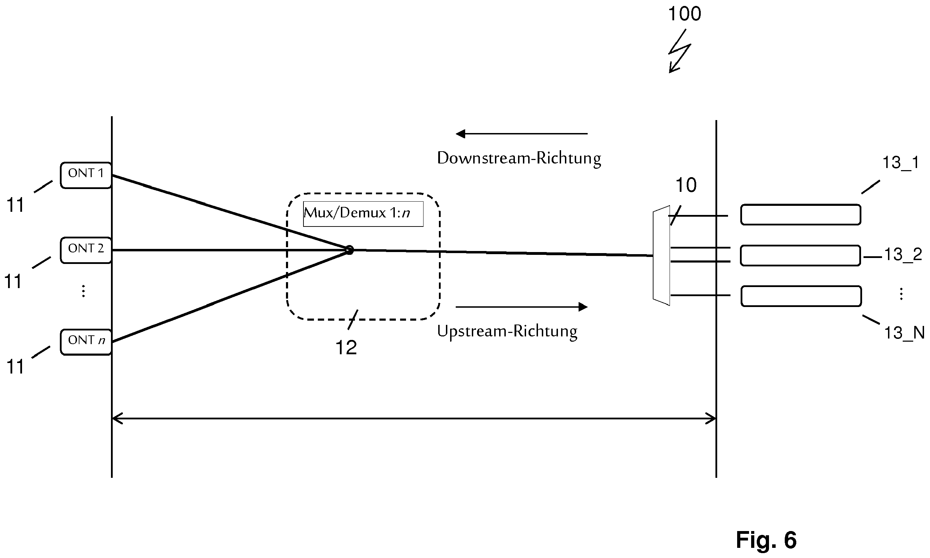

Wollte man einem zweiten Service Provider auf Faserebene Zugang zu den angeschlossenen Netzanschlüssen 11 geben, so müsste man, wie in Figur 6 dargestellt, bspw. einen weiteren Koppelpunkt 10 einführen und entsprechende Filter zur lokalen Isolation einsetzen. Es ergibt sich dann zusätzlich zu den Zugang zur Netzinfrastruktur suchenden Dienstanbietern 13_1, 13_2, ..., 13_N die Rolle eines Netzinfrastruktur Providers NIP, der diese Dienstleistungen den Service Providern 13_1, 13_2, ..., 13_N zur Verfügung stellt. Der NIP hat nunmehr, wie durch die jeweils rechts und links angeordneten senkrechten Linien dargestellt, Verantwortung für das gesamte Zugangsnetz 100. Außerhalb des Zugangsnetzes sind die Endverbraucher über einen optischen Netzanschluss 11 sowie auf Netzseite die Dienstanbieter 13_1, 13_2, ..., 13_N über eine Optical Line Termination (OLT) angebunden. Bei dieser Konstellation muss sich jeder einzelne Dienstanbieter 13_1, 13_2, ..., 13_N auf die notwendigen getroffenen Absprachen bezüglich Leistung und Wellenlängen mit den jeweils anderen Service Providern 13_1, 13_2, ..., 13_N verlassen, ohne selbst eine direkte Möglichkeit der Überprüfung zu haben. Im Fehlerfall kommt es zu Störungen auf den betroffenen Leitungen für alle angeschlossenen Dienstanbieter. Auch eine Einhaltung der Laserklasse 1M ist ohne weitere Maßnahmen im weiteren Betrieb mit mehreren Dienstanbietern auf einer Glasfaser nicht sichergestellt. Die Laserklasse 1M ist eine Klasse aus der Klassifizierung nach EN 60825-1, wobei diese Klassifizierung eine Gefährlichkeit für den Menschen ausgehend von den einzelnen Lasern angibt. Dabei entspricht die Laserklasse 1M einer Laserklasse einer zugänglichen Laserstrahlung, wobei die zugängliche Laserstrahlung ungefährlich ist, solange keine optischen Instrumente, wie Lupen oder Ferngläser, verwendet werden. Im Rahmen der Glasfasernetze bzw. der optischen Zugangsnetze muss eine Einhaltung der Laserklasse 1M gewährleistet sein. Eine Zusammenarbeit auf einer reinen Vertrauensebene zwischen Dienstanbieter und Netzinfrastrukturanbieter ist aus Sicherheitsgründen nicht zu empfehlen, da dadurch eine Einhaltung der Laserklasse 1M nicht zu garantieren ist.

## Patentansprüche

1. Verfahren zur automatischen Überwachung von Betriebsparametern in mehreren eine gemeinsame Netzinfrastruktur nutzenden Telekommunikationsnetzen von entsprechend mehreren Dienstanbietern (213_1, 231_2, ..., 213_N), wobei die mehreren Telekommunikationsnetze ein gemeinsames optisches Zugangsnetz (200) nutzen, über welches ein jeweiliger Dienstanbieter (213_1, 231_2, ..., 213_N) mit einem jeweiligen einen Dienst von dem jeweiligen Dienstanbieter nutzenden Endnutzer (211_1, 211_2, ..., 211_n) verbunden wird, wobei die mehreren Dienstanbieter über jeweilige den jeweiligen Dienstanbietern zuordenbare Zuleitungen (1, ..., N) zu einem gemeinsamen ersten Koppelpunkt (210) an das optische Zugangsnetz (200) angekoppelt werden und über von einem gemeinsamen zweiten Koppelpunkt (212) abzweigende jeweilige den jeweiligen Dienstanbietern zuordenbare Anschlussleitungen ein jeweiliger Dienstanbieter (213_1, 231_2, ..., 213_N) jeweils mit einem jeweiligen einen Dienst von dem jeweiligen Dienstanbieter nutzenden Endnutzer (211_1, 211_2, ..., 211_n) verbunden wird, wobei der erste Koppelpunkt (210) und der zweite Koppelpunkt (212) über eine Hauptleitung (205) miteinander verbunden sind, wobei in einer jeweiligen Zuleitung eines jeweiligen Dienstanbieters zu dem optischen Zugangsnetz (200) eine jeweilige dem jeweiligen Dienstanbieter zuordenbare dienstanbieterseitige Überwachungseinheit (219, 219*, 219_1, 219_1*, 219_2*, ..., 219_N*) vorgesehen wird und in dem Hauptstrang zwischen erstem Koppelpunkt (210) und zweitem Koppelpunkt (212) eine netzseitige Überwachungseinheit (218) vorgesehen wird, wobei die netzseitige Überwachungseinheit (218) und die jeweiligen dienstanbieterseitigen Überwachungseinheiten (219, 219*, 219_1, 219_1*, 219_2*, ..., 219_N*) jeweilig mit einer zentralen Kontroll- und Steuereinheit (220) verbunden werden, wobei die zentrale Kontroll- und Steuereinheit (220) von den Überwachungseinheiten (218, 219, 219*, 219_1, 219_1*, 219_2*, ..., 219_N*) erfasste Daten aufnimmt, speichert und zentral auswertet.

2. Verfahren nach Anspruch 1, bei dem die zentrale Kontroll- und Steuereinheit (220) die von den Überwachungseinheiten (218, 219, 219*, 219_1, 219_1*, 219_2*, ..., 219_N*) erfassten Daten in einer Speichereinheit speichert und zur zentralen Auswertung mit in der Speichereinheit abgelegten Referenzwerten jeweilig vergleicht.

3. Verfahren nach einem der voranstehenden Ansprüche, bei dem anhand der erfassten Daten überprüft wird, ob bei einem gemeinsamen Betrieb des optischen Zugangsnetzes (200) für die Zuleitungen der mehreren Dienstanbieter (213_1, 231_2, ..., 213_N) in Summe und/oder für den Hauptstrang (205) die Laserklasse 1M nicht überschritten wird, und/oder ob den jeweiligen Dienstanbietern (213_1, 231_2, ..., 213_N) zugewiesene bzw. vereinbarte technische Betriebsparameter, insbesondere Wellenlänge, Wellenlängenbereiche und/oder Leistung pro Wellenlänge/Wellenlängenbereich, eingehalten werden, und/oder bei dem anhand der erfassten Daten fehlerhafte Netzkonfigurationen des optischen Zugangsnetzes (200) und/oder fehlerhafte Zusammenschaltungen und/oder fehlerhaft arbeitende Netzelemente, insbesondere Wellenlängenkoppler, Filter, ermittelt werden.

4. Verfahren nach einem der voranstehenden Ansprüche, bei dem die zentrale Kontroll- und Steuereinheit (220) anhand der erfassten Daten alle Zuleitungen der mehreren Dienstanbieter (213_1, 231_2, ..., 213_N) einzeln zentral überwacht und im Fehlerfall eine Fehlkonfiguration und/oder ein Fehlverhalten mindestens einer einzelnen Zuleitung (1, ..., N) erkennt, die mindestens eine betroffene einzelne Zuleitung identifiziert und gezielt abschaltet.

5. Verfahren nach einem der voranstehenden Ansprüche, bei dem die netzseitige Überwachungseinheit (218) auf dem Hauptstrang (205) zwischen erstem Koppelpunkt (210) und zweitem Koppelpunkt (212) als passiver Leistungsteiler (218a) mit daran angeschlossenem Leistungsmesser (218b) ausgeführt wird, wobei ein Teil der eingespeisten Leistung mittels des Leistungsteilers (218a) ausgekoppelt und mittels des Leistungsmessers (218b) bestimmt und der Kontrolleinheit (220) mitgeteilt wird.

6. Verfahren nach einem der voranstehenden Ansprüche, bei dem eine jeweilige dem jeweiligen Dienstanbieter (213_1, 213_2, ..., 213_N) zuordenbare dienstanbieterseitige Überwachungseinheit (219_1, 219_1*, 219_2*, ..., 219_N*) als passiver Leistungsteiler (221_1, 221_2, ..., 221_N) mit daran angeschlossenem Leistungsmesser (222_1, 231) ausgeführt wird, wobei ein Teil der eingespeisten Leistung mittels des Leistungsteilers (221_1, 221_2, ..., 221_N) ausgekoppelt und mittels des Leistungsmessers (222_1, 231) bestimmt und der Kontrolleinheit (220) mitgeteilt wird.

7. Verfahren nach Anspruch 6, bei dem anhand des ausgekoppelten Teils der eingespeisten Leistung mittels des Leistungsteilers (221_1, 221_2, ..., 221_N) eine Wellenlänge für den jeweiligen Dienstanbieter mittels einer Wellenlängen-Analyseeinheit (223_1, 232) bestimmt und der Kontrolleinheit (220) mitgeteilt wird.

8. Verfahren nach einem der Ansprüche 6 oder 7, bei dem der mit dem jeweiligen passiven Leistungsteiler (221_1, 221_2, ..., 221_N) für den jeweiligen Dienstanbieter verbundene Leistungsmesser (231) als allen an den ersten Koppelpunkt angekoppelten Dienstanbietern zugeordneter übergeordneter Leistungsmesser (231) ausgeführt wird, der mit den jeweiligen passiven Leistungsteilern (221_1, 221_2, ..., 221_N) der jeweiligen Dienstanbieter über eine jeweilige, insbesondere optische, Schalteinheit (230) verbunden wird.

9. Verfahren nach Anspruch 7 und 8, bei dem die Wellenlängen-Analyseeinheit als allen an den ersten Koppelpunkt (210) angekoppelten Dienstanbietern zugeordnete übergeordnete Wellenlängen-Analyseeinheit (232) ausgeführt wird, die mit den jeweiligen passiven Leistungsteilern (221_1, 221_2, ..., 221_N) der jeweiligen Dienstanbieter über die jeweilige, insbesondere optische, Schalteinheit (230) verbunden wird.

10. Verfahren nach einem der Ansprüche 6 bis 9, bei dem Messungen des Leistungsmessers (231) bzw. der jeweiligen Leistungsmesser (222_1) und/oder der Wellenlängen-Analyseeinheit (232) bzw. der jeweiligen Wellenlängen-Analyseeinheiten (223_1) über eine dem Leistungsmesser bzw. über eine jeweilige den jeweiligen Leistungsmessern nachgeschaltete Auswerte- und Leitungssteuerungseinheit (224_1, 233) ausgewertet werden und die Auswertungen der Kontrolleinheit (220) und gezielt mindestens einer Auswahl von jeweiligen Dienstanbietern zugeordneten Leitungsbeeinflussungselementen (225_1, 225_2, ..., 225_N) übermittelt werden.

11. Verfahren nach Anspruch 10, bei dem die ausgewählten Leitungsbeeinflussungselemente (225_1, 225_2, ..., 225_N) wahlweise durch Dämpfung und/oder geeignete Schaltung die von den jeweiligen Dienstanbietern in den ersten Koppelpunkt (210) jeweils eingespeiste Leistung auf Basis der übermittelten Auswertungen steuern.

12. System zur automatischen Überwachung von Betriebsparametern in mehreren eine gemeinsame Netzinfrastruktur nutzenden Telekommunikationsnetzen von entsprechend mehreren Dienstanbietern (213_1, 231_2, ..., 213_N), wobei die mehreren Telekommunikationsnetze ein gemeinsames optisches Zugangsnetz (200) nutzen, über welches ein jeweiliger Dienstanbieter (213_1, 231_2, ..., 213_N) mit einem jeweiligen einen Dienst von dem jeweiligen Dienstanbieter nutzenden Endnutzer (211_1, 211_2, ..., 211_n) verbunden ist, wobei die mehreren Dienstanbieter (213_1, 231_2, ..., 213_N) über jeweilige den jeweiligen Dienstanbietern zuordenbare Zuleitungen (1, ..., N) zu einem gemeinsamen ersten Koppelpunkt (210) an das optische Zugangsnetz (200) angekoppelt sind und über von einem gemeinsamen zweiten Koppelpunkt (212) abzweigende jeweilige den jeweiligen Dienstanbietern zuordenbare Anschlussleitungen ein jeweiliger Dienstanbieter (213_1, 231_2, ..., 213_N) jeweils mit einem jeweiligen einen Dienst von dem jeweiligen Dienstanbieter nutzenden Endnutzer (211_1, 211_2, ..., 211_n) verbunden ist, wobei der erste Koppelpunkt (210) und der zweite Koppelpunkt (212) über eine Hauptleitung (205) miteinander verbunden sind, wobei in einer jeweiligen Zuleitung (1, ..., N) eines jeweiligen Dienstanbieters (213_1, 231_2, ..., 213_N) zu dem optischen Zugangsnetz (200) eine jeweilige dem jeweiligen Dienstanbieter zuordenbare dienstanbieterseitige Überwachungseinheit (219, 219_1, 219*, 219_1*, 219_2*, ..., 219_N*) angeordnet ist und in dem Hauptstrang (205) zwischen erstem Koppelpunkt (210) und zweitem Koppelpunkt (212) eine netzseitige Überwachungseinheit (218) angeordnet ist, wobei die netzseitige Überwachungseinheit (218) und die jeweiligen dienstanbieterseitigen Überwachungseinheiten (219, 219_1, 219*, 219_1*, 219_2*, ..., 219_N*) jeweilig mit einer zentralen Kontroll- und Steuereinheit (220) verbunden sind, wobei die zentrale Kontroll- und Steuereinheit (220) dazu konfiguriert ist, von den Überwachungseinheiten (218, 219_1 219, 219*, 219_1*, 219_2*, ..., 219_N*) erfasste Daten aufzunehmen, zu speichern, zentral auszuwerten und auf Basis der zentral ausgewerteten Daten Einfluss auf eine Steuerung von in das Zugangsnetz (200) einspeisbarer Leistung zu nehmen.

13. System nach Anspruch 12, bei dem die netzseitige Überwachungseinheit (218) auf dem Hauptstrang (205) zwischen erstem Koppelpunkt (210) und zweitem Koppelpunkt (212) als passiver Leistungsteiler (218a) mit daran angeschlossenem Leistungsmesser (218b) ausgeführt ist, wobei der Leistungsteiler (218a) dazu konfiguriert ist, einen Teil der eingespeisten Leistung auszukoppeln und der Leistungsmesser (218b) dazu konfiguriert ist, die Leistung zu bestimmen und der zentralen Kontroll- und Überwachungseinheit (220) mitzuteilen, und/oder bei dem eine jeweilige einem jeweiligen Dienstanbieter zuordenbare dienstanbieterseitige Überwachungseinheit (219, 219_1, 219*, 219_1*, 219_2*, ..., 219_N*) als passiver Leistungsteiler (221_1, 221_2, ..., 221_N) mit daran angeschlossenem Leistungsmesser (222_1, 231) ausgeführt ist, wobei der Leistungsteiler (221_1, 221_2, ..., 221_N) dazu konfiguriert ist, einen Teil der eingespeisten Leistung auszukoppeln und der Leistungsmesser (222_1, 231) dazu konfiguriert ist, die von dem Leistungsteiler (221_1, 221_2, ..., 221_N) ausgekoppelte Leistung zu bestimmen und der zentralen Kontroll- und Überwachungseinheit (220) mitzuteilen.

14. System nach Anspruch 13, das ferner mindestens eine Wellenlängen-Analyseeinheit (223_1, 232) umfasst, die dazu konfiguriert ist, anhand des von dem Leistungsteiler (221_1, 221_2, ..., 221_N) ausgekoppelten Teils der von dem jeweiligen Dienstanbieter eingespeisten Leistung eine Wellenlänge für den jeweiligen Dienstanbieter zu bestimmen und der Kontroll- und Überwachungseinheit (220) mitzuteilen.

15. System nach einem der Ansprüche 13 oder 14, bei dem der mit dem jeweiligen passiven Leistungsteiler (221_1, 221_2, ..., 221_N) für den jeweiligen Dienstanbieter verbundene Leistungsmesser als allen an den ersten Koppelpunkt (210) angekoppelten Dienstanbietern zugeordneter übergeordneter Leistungsmesser (231) ausgeführt ist, der mit den jeweiligen passiven Leistungsteilern (221_1, 221_2, ..., 221_N) der jeweiligen Dienstanbieter über eine jeweilige, insbesondere optische, Schalteinheit (230) verbunden ist.

16. System nach einem der Ansprüche 14 oder 15, bei dem die Wellenlängen-Analyseeinheit als allen an den ersten Koppelpunkt (210) angekoppelten Dienstanbietern zugeordnete übergeordnete Wellenlängen-Analyseeinheit (232) ausgeführt ist, die mit den jeweiligen passiven Leistungsteilern (221_1, 221_2, ..., 221_N) der jeweiligen Dienstanbieter über die jeweilige, insbesondere optische, Schalteinheit (230) verbunden ist.

17. System nach einem der Ansprüche 13 bis 16, bei dem dem Leistungsmesser (231) bzw. den jeweiligen Leistungsmessern (222_1) und/oder der Wellenlängen-Analyseeinheit (232) bzw. den jeweiligen Wellenlängen-Analyseeinheiten (223_1) eine Auswerte- und Leitungssteuerungseinheit (233) bzw. eine jeweilige Auswerte- und Leitungssteuerungseinheit (224_1) nachgeschaltet ist, die dazu ausgelegt ist, Messungen des Leistungsmessers bzw. der jeweiligen Leistungsmesser und/oder der Wellenlängen-Analyseeinheit bzw. der jeweiligen Wellenlängen-Analyseeinheiten auszuwerten und die Auswertungen der zentralen Kontroll- und Überwachungseinheit (220) und gezielt, insbesondere durch eine nochmalige Auswertung durch die zentrale Kontroll- und Überwachungseinheit (220) ggf. modifiziert, mindestens einer Auswahl von jeweiligen Dienstanbietern zugeordneten Leitungsbeeinflussungselementen (225_1, 225_2, ..., 225_N) zu übermitteln.

18. System nach Anspruch 17, bei dem die den jeweiligen Dienstanbietern zugeordneten Leitungsbeeinflussungselemente (225_1, 225_2, ..., 225_N) dazu konfiguriert sind, wahlweise durch Dämpfung mittels Dämpfern und/oder geeignete Schaltung mittels Schalter die von den jeweiligen Dienstanbietern in den ersten Koppelpunkt (210) jeweils eingespeiste Leistung auf Basis der übermittelten Auswertungen zu steuern.

## Geänderte Patentansprüche

### Geänderte Patentansprüche gemäss Regel 137(2) EPÜ.

1. Verfahren zur automatischen Überwachung von Betriebsparametern in mehreren eine gemeinsame Netzinfrastruktur nutzenden Telekommunikationsnetzen von entsprechend mehreren Dienstanbietern (213_1, 231_2, ..., 213_N), wobei die mehreren Telekommunikationsnetze ein gemeinsames optisches Zugangsnetz (200) nutzen, über welches ein jeweiliger Dienstanbieter (213_1, 231_2, ..., 213_N) mit einem jeweiligen einen Dienst von dem jeweiligen Dienstanbieter nutzenden Endnutzer (211_1, 211_2, ..., 211_n) verbunden wird, **dadurch gekennzeichnet, dass** die mehreren Dienstanbieter über jeweilige den jeweiligen Dienstanbietern zuordenbare Zuleitungen (1, ..., N) zu einem gemeinsamen ersten Koppelpunkt (210) an das optische Zugangsnetz (200) angekoppelt werden und über von einem gemeinsamen zweiten Koppelpunkt (212) abzweigende jeweilige den jeweiligen Dienstanbietern zuordenbare Anschlussleitungen ein jeweiliger Dienstanbieter (213_1, 231_2, ..., 213_N) jeweils mit einem jeweiligen einen Dienst von dem jeweiligen Dienstanbieter nutzenden Endnutzer (211_1, 211_2, ..., 211_n) verbunden wird, wobei der erste Koppelpunkt (210) und der zweite Koppelpunkt (212) über eine Hauptleitung (205) miteinander verbunden sind, wobei in einer jeweiligen Zuleitung eines jeweiligen Dienstanbieters zu dem optischen Zugangsnetz (200) eine jeweilige dem jeweiligen Dienstanbieter zuordenbare dienstanbieterseitige Überwachungseinheit (219, 219*, 219_1, 219_1*, 219_2*, ..., 219_N*) vorgesehen wird und in dem Hauptstrang zwischen erstem Koppelpunkt (210) und zweitem Koppelpunkt (212) eine netzseitige Überwachungseinheit (218) vorgesehen wird, wobei die netzseitige Überwachungseinheit (218) und die jeweiligen dienstanbieterseitigen Überwachungseinheiten (219, 219*, 219_1, 219_1*, 219_2*, ..., 219_N*) jeweilig mit einer zentralen Kontroll- und Steuereinheit (220) verbunden werden, wobei die zentrale Kontroll- und Steuereinheit (220) von den Überwachungseinheiten (218, 219, 219*, 219_1, 219_1*, 219_2*, ..., 219_N*) erfasste Daten aufnimmt, speichert und zentral auswertet.

2. Verfahren nach Anspruch 1, bei dem die zentrale Kontroll- und Steuereinheit (220) die von den Überwachungseinheiten (218, 219, 219*, 219_1, 219_1*, 219_2*, ..., 219_N*) erfassten Daten in einer Speichereinheit speichert und zur zentralen Auswertung mit in der Speichereinheit abgelegten Referenzwerten jeweilig vergleicht.

3. Verfahren nach einem der voranstehenden Ansprüche, bei dem anhand der erfassten Daten überprüft wird, ob bei einem gemeinsamen Betrieb des optischen Zugangsnetzes (200) für die Zuleitungen der mehreren Dienstanbieter (213_1, 231_2, ..., 213_N) in Summe und/oder für den Hauptstrang (205) die Laserklasse 1M nicht überschritten wird, und/oder ob den jeweiligen Dienstanbietern (213_1, 231_2, ..., 213_N) zugewiesene bzw. vereinbarte technische Betriebsparameter eingehalten werden, und/oder bei dem anhand der erfassten Daten fehlerhafte Netzkonfigurationen des optischen Zugangsnetzes (200) und/oder fehlerhafte Zusammenschaltungen und/oder fehlerhaft arbeitende Netzelemente ermittelt werden.

4. Verfahren nach einem der voranstehenden Ansprüche, bei dem die zentrale Kontroll- und Steuereinheit (220) anhand der erfassten Daten alle Zuleitungen der mehreren Dienstanbieter (213_1, 231_2, ..., 213_N) einzeln zentral überwacht und im Fehlerfall eine Fehlkonfiguration und/oder ein Fehlverhalten mindestens einer einzelnen Zuleitung (1, ..., N) erkennt, die mindestens eine betroffene einzelne Zuleitung identifiziert und gezielt abschaltet.

5. Verfahren nach einem der voranstehenden Ansprüche, bei dem die netzseitige Überwachungseinheit (218) auf dem Hauptstrang (205) zwischen erstem Koppelpunkt (210) und zweitem Koppelpunkt (212) als passiver Leistungsteiler (218a) mit daran angeschlossenem Leistungsmesser (218b) ausgeführt wird, wobei ein Teil der eingespeisten Leistung mittels des Leistungsteilers (218a) ausgekoppelt und mittels des Leistungsmessers (218b) bestimmt und der Kontrolleinheit (220) mitgeteilt wird.

6. Verfahren nach einem der voranstehenden Ansprüche, bei dem eine jeweilige dem jeweiligen Dienstanbieter (213_1, 213_2, ..., 213_N) zuordenbare dienstanbieterseitige Überwachungseinheit (219_1, 219_1*, 219_2*, ..., 219_N*) als passiver Leistungsteiler (221_1, 221_2, ..., 221_N) mit daran angeschlossenem Leistungsmesser (222_1, 231) ausgeführt wird, wobei ein Teil der eingespeisten Leistung mittels des Leistungsteilers (221_1, 221_2, ..., 221_N) ausgekoppelt und mittels des Leistungsmessers (222_1, 231) bestimmt und der Kontrolleinheit (220) mitgeteilt wird.

7. Verfahren nach Anspruch 6, bei dem anhand des ausgekoppelten Teils der eingespeisten Leistung mittels des Leistungsteilers (221_1, 221_2, ..., 221_N) eine Wellenlänge für den jeweiligen Dienstanbieter mittels einer Wellenlängen-Analyseeinheit (223_1, 232) bestimmt und der Kontrolleinheit (220) mitgeteilt wird.

8. Verfahren nach einem der Ansprüche 6 oder 7, bei dem der mit dem jeweiligen passiven Leistungsteiler (221_1, 221_2, ..., 221_N) für den jeweiligen Dienstanbieter verbundene Leistungsmesser (231) als allen an den ersten Koppelpunkt angekoppelten Dienstanbietern zugeordneter übergeordneter Leistungsmesser (231) ausgeführt wird, der mit den jeweiligen passiven Leistungsteilern (221_1, 221_2, ..., 221_N) der jeweiligen Dienstanbieter über eine jeweilige Schalteinheit (230) verbunden wird.

9. Verfahren nach Anspruch 7 und 8, bei dem die Wellenlängen-Analyseeinheit als allen an den ersten Koppelpunkt (210) angekoppelten Dienstanbietern zugeordnete übergeordnete Wellenlängen-Analyseeinheit (232) ausgeführt wird, die mit den jeweiligen passiven Leistungsteilern (221_1, 221_2, ..., 221_N) der jeweiligen Dienstanbieter über die jeweilige Schalteinheit (230) verbunden wird.

10. Verfahren nach einem der Ansprüche 6 bis 9, bei dem Messungen des Leistungsmessers (231) bzw. der jeweiligen Leistungsmesser (222_1) und/oder der Wellenlängen-Analyseeinheit (232) bzw. der jeweiligen Wellenlängen-Analyseeinheiten (223_1) über eine dem Leistungsmesser bzw. über eine jeweilige den jeweiligen Leistungsmessern nachgeschaltete Auswerte- und Leitungssteuerungseinheit (224_1, 233) ausgewertet werden und die Auswertungen der Kontrolleinheit (220) und gezielt mindestens einer Auswahl von jeweiligen Dienstanbietern zugeordneten Leitungsbeeinflussungselementen (225_1, 225_2, ..., 225_N) übermittelt werden.

11. Verfahren nach Anspruch 10, bei dem die ausgewählten Leitungsbeeinflussungselemente (225_1, 225_2, ..., 225_N) wahlweise durch Dämpfung und/oder geeignete Schaltung die von den jeweiligen Dienstanbietern in den ersten Koppelpunkt (210) jeweils eingespeiste Leistung auf Basis der übermittelten Auswertungen steuern.

12. System zur automatischen Überwachung von Betriebsparametern in mehreren eine gemeinsame Netzinfrastruktur nutzenden Telekommunikationsnetzen von entsprechend mehreren Dienstanbietern (213_1, 231_2, ..., 213_N), wobei die mehreren Telekommunikationsnetze ein gemeinsames optisches Zugangsnetz (200) nutzen, über welches ein jeweiliger Dienstanbieter (213_1, 231_2, ..., 213_N) mit einem jeweiligen einen Dienst von dem jeweiligen Dienstanbieter nutzenden Endnutzer (211_1, 211_2, ..., 211_n) verbunden ist, **dadurch gekennzeichnet, dass** die mehreren Dienstanbieter (213_1, 231_2, ..., 213_N) über jeweilige den jeweiligen Dienstanbietern zuordenbare Zuleitungen (1, ..., N) zu einem gemeinsamen ersten Koppelpunkt (210) an das optische Zugangsnetz (200) angekoppelt sind und über von einem gemeinsamen zweiten Koppelpunkt (212) abzweigende jeweilige den jeweiligen Dienstanbietern zuordenbare Anschlussleitungen ein jeweiliger Dienstanbieter (213_1, 231_2, ..., 213_N) jeweils mit einem jeweiligen einen Dienst von dem jeweiligen Dienstanbieter nutzenden Endnutzer (211_1, 211_2, ..., 211_n) verbunden ist, wobei der erste Koppelpunkt (210) und der zweite Koppelpunkt (212) über eine Hauptleitung (205) miteinander verbunden sind, wobei in einer jeweiligen Zuleitung (1, ..., N) eines jeweiligen Dienstanbieters (213_1, 231_2, ..., 213_N) zu dem optischen Zugangsnetz (200) eine jeweilige dem jeweiligen Dienstanbieter zuordenbare dienstanbieterseitige Überwachungseinheit (219, 219_1, 219*, 219_1*, 219_2*, ..., 219_N*) angeordnet ist und in dem Hauptstrang (205) zwischen erstem Koppelpunkt (210) und zweitem Koppelpunkt (212) eine netzseitige Überwachungseinheit (218) angeordnet ist, wobei die netzseitige Überwachungseinheit (218) und die jeweiligen dienstanbieterseitigen Überwachungseinheiten (219, 219_1, 219*, 219_1*, 219_2*, ..., 219_N*) jeweilig mit einer zentralen Kontroll- und Steuereinheit (220) verbunden sind, wobei die zentrale Kontroll- und Steuereinheit (220) dazu konfiguriert ist, von den Überwachungseinheiten (218, 219_1219, 219*, 219_1*, 219_2*, ..., 219_N*) erfasste Daten aufzunehmen, zu speichern, zentral auszuwerten und auf Basis der zentral ausgewerteten Daten Einfluss auf eine Steuerung von in das Zugangsnetz (200) einspeisbarer Leistung zu nehmen.

13. System nach Anspruch 12, bei dem die netzseitige Überwachungseinheit (218) auf dem Hauptstrang (205) zwischen erstem Koppelpunkt (210) und zweitem Koppelpunkt (212) als passiver Leistungsteiler (218a) mit daran angeschlossenem Leistungsmesser (218b) ausgeführt ist, wobei der Leistungsteiler (218a) dazu konfiguriert ist, einen Teil der eingespeisten Leistung auszukoppeln und der Leistungsmesser (218b) dazu konfiguriert ist, die Leistung zu bestimmen und der zentralen Kontroll- und Überwachungseinheit (220) mitzuteilen, und/oder bei dem eine jeweilige einem jeweiligen Dienstanbieter zuordenbare dienstanbieterseitige Überwachungseinheit (219, 219_1, 219*, 219_1*, 219_2*, ..., 219_N*) als passiver Leistungsteiler (221_1, 221_2, ..., 221_N) mit daran angeschlossenem Leistungsmesser (222_1, 231) ausgeführt ist, wobei der Leistungsteiler (221_1, 221_2, ..., 221_N) dazu konfiguriert ist, einen Teil der eingespeisten Leistung auszukoppeln und der Leistungsmesser (222_1, 231) dazu konfiguriert ist, die von dem Leistungsteiler (221_1, 221_2, ..., 221_N) ausgekoppelte Leistung zu bestimmen und der zentralen Kontroll- und Überwachungseinheit (220) mitzuteilen.

14. System nach Anspruch 13, das ferner mindestens eine Wellenlängen-Analyseeinheit (223_1, 232) umfasst, die dazu konfiguriert ist, anhand des von dem Leistungsteiler (221_1, 221_2, ..., 221_N) ausgekoppelten Teils der von dem jeweiligen Dienstanbieter eingespeisten Leistung eine Wellenlänge für den jeweiligen Dienstanbieter zu bestimmen und der Kontroll- und Überwachungseinheit (220) mitzuteilen.

15. System nach einem der Ansprüche 13 oder 14, bei dem der mit dem jeweiligen passiven Leistungsteiler (221_1, 221_2, ..., 221_N) für den jeweiligen Dienstanbieter verbundene Leistungsmesser als allen an den ersten Koppelpunkt (210) angekoppelten Dienstanbietern zugeordneter übergeordneter Leistungsmesser (231) ausgeführt ist, der mit den jeweiligen passiven Leistungsteilern (221_1, 221_2, ..., 221_N) der jeweiligen Dienstanbieter über eine jeweilige Schalteinheit (230) verbunden ist.

16. System nach einem der Ansprüche 14 oder 15, bei dem die Wellenlängen-Analyseeinheit als allen an den ersten Koppelpunkt (210) angekoppelten Dienstanbietern zugeordnete übergeordnete Wellenlängen-Analyseeinheit (232) ausgeführt ist, die mit den jeweiligen passiven Leistungsteilern (221_1, 221_2, ..., 221_N) der jeweiligen Dienstanbieter über die jeweilige Schalteinheit (230) verbunden ist.

17. System nach einem der Ansprüche 13 bis 16, bei dem dem Leistungsmesser (231) bzw. den jeweiligen Leistungsmessern (222_1) und/oder der Wellenlängen-Analyseeinheit (232) bzw. den jeweiligen Wellenlängen-Analyseeinheiten (223_1) eine Auswerte- und Leitungssteuerungseinheit (233) bzw. eine jeweilige Auswerte- und Leitungssteuerungseinheit (224_1) nachgeschaltet ist, die dazu ausgelegt ist, Messungen des Leistungsmessers bzw. der jeweiligen Leistungsmesser und/oder der Wellenlängen-Analyseeinheit bzw. der jeweiligen Wellenlängen-Analyseeinheiten auszuwerten und die Auswertungen der zentralen Kontroll- und Überwachungseinheit (220) und gezielt mindestens einer Auswahl von jeweiligen Dienstanbietern zugeordneten Leitungsbeeinflussungselementen (225_1, 225_2, ..., 225_N) zu übermitteln.

18. System nach Anspruch 17, bei dem die den jeweiligen Dienstanbietern zugeordneten Leitungsbeeinflussungselemente (225_1, 225_2, ..., 225_N) dazu konfiguriert sind, wahlweise durch Dämpfung mittels Dämpfern und/oder geeignete Schaltung mittels Schalter die von den jeweiligen Dienstanbietern in den ersten Koppelpunkt (210) jeweils eingespeiste Leistung auf Basis der übermittelten Auswertungen zu steuern.
